# FASCICULE DE BREVET EUROPEEN

(11) **EP 3 105 506 B1**
(45) Date de publication et mention de la délivrance du brevet: **07.07.2021**
(21) Numéro de dépôt: 15706856.0
(22) Date de dépôt: 26.01.2015
(51) Int. Cl.: F23R 3/20, F23D 14/20

(54) **MODULE DE BRÛLEUR EN VEINE**
BRENNERMODUL IM STROM
IN-STREAM BURNER MODULE

(30) Priorité: 12.02.2014 FR 1451064
(43) Date de publication de la demande: 21.12.2016
(73) Titulaire: Fives Pillard, 13008 Marseille (FR)
(72) Inventeur: SAID, Fouad, F-13014 Marseille (FR); RICCI, Louis, F-13830 Roquefort La Bedoule (FR); BOUDET, Yannick, F-13480 Cabries (FR)
(74) Mandataire: Novagraaf Technologies
(86) Numéro de dépôt international: PCT/FR2015/050176
(87) Numéro de publication internationale: WO 2015/121559

(56) Documents cités:
- EP-A1- 0 222 654
- EP-A1- 2 442 026
- JP-A- S6 089 610
- JP-A- S6 089 611
- US-A- 3 732 059
- US-A- 4 237 858
- US-B1- 6 301 875
- None

## Description

La présente invention se rapporte à un brûleur en veine d'air utilisé pour le réchauffage direct d'air ou de gaz de combustion issue de turbine ou de moteurs et plus particulièrement au module de brûleur en veine dont la juxtaposition cote à cote sur des rampes constitue le bruleur en veine. Ce type de brûleur fonctionne avec comme comburant les gaz de combustion de turbine (appelé TEG) ou de moteur qui ont un taux d'oxygène (sur fumées humides) inférieur à l'air ambiant, une température supérieure à la température ambiante et généralement, une vitesse au passage du brûleur relativement faible et comme combustible du gaz naturel, gaz de schiste, gaz de pétrole ou gaz issus de procédés industriels. Un brûleur ayant les caractéristiques du préambule de la revendication 1 est décrit dans le document US 3732059.

Au cours des dernières années, les turbines à gaz et chaudières de récupération ont évoluées vers une augmentation du rendement énergétique des cycles combinés. En conséquence, les gaz de turbine (TEG) sont caractérisés par des teneurs en oxygène sur fumées humides de plus en plus faibles (entre 9% et 13%) et des températures plus variables et plus élevée (entre 350°C et 700°C).

De plus, l'évolution des cycles de production de vapeur est à l'origine du positionnement des brûleurs en aval d'un premier étage d'échangeur, ce qui a pour conséquence à la fois :
- d'augmenter la section des gaines dans le plan d'implantation des brûleurs, et donc de diminuer la vitesse des gaz de turbine dans cette section. Cela nécessite, dans la majorité des cas, pour le bon fonctionnement des brûleurs (stabilité de flamme), l'augmentation de la vitesse locale par l'ajout de plaques d'obturations (baffles) coûteuses, et
- d'abaisser la température initiale des gaz de turbine à des températures comprises entre 350°C et 550°C.

L'évolution de l'ensemble de ces paramètres rend plus difficiles les conditions de bonne combustion, et plus particulièrement la stabilité des flammes et la maîtrise des émissions de monoxyde de carbone (CO).

D'autre part, la maîtrise des longueurs de flamme est un enjeu majeur puisque qu'il permet de maîtriser le profil de température aval tout en minimisant les longueurs de gaines, très coûteuses.

Les modules de brûleurs en veine connus n'assurent pas le mélange et les dépressions locales nécessaires pour assurer la maîtrise des émissions de monoxyde de carbone (CO) et la stabilité des flammes dans ces conditions difficiles, notamment à vitesses de TEG faibles.

L'objet de l'invention est de proposer un nouveau module de brûleur en veine permettant de répondre à ces problèmes et notamment d'assurer:
- la stabilité des flammes avec des teneurs en O₂ faibles,
- le fonctionnement avec de très faibles émissions de CO,
- le fonctionnement avec des vitesses de TEG faibles permettant de diminuer, voire de supprimer les plaques d'obturation,
- le fonctionnement avec des puissances linéaires élevées,
- le fonctionnement avec des flammes courtes,
grâce à de nouvelles dispositions qui augmentent la vitesse du mélange TEG/gaz du module de brûleur et les zones de dépressions locales par un aérodynamisme nouveau et optimisé.

Ainsi le module de brûleur en veine d'air selon l'invention comprend un conduit d'alimentation présentant une section sensiblement circulaire et un axe, des orifices d'injection de combustible situés sur le conduit et destinés à produire une flamme, des orifices d'injection de comburant et des ailettes, ou casquettes, formant une structure appelée module ou bloc) et disposées symétriquement par rapport à un plan P d'écoulement du combustible en amont du module de brûleur et latéralement sur le conduit de chaque coté des orifices d'injection de combustible, au moins deux orifices d'injection de combustible dans une section du conduit qu'ils ont un axe qui fait un angle α avec le plan d'écoulement du combustible. Ainsi l'injection du gaz se fait en plusieurs orifices situés dans au moins deux plans divergents. Ces deux plans délimitent un espace sans apport de combustible et sans apport de comburant ce qui est favorable à la recirculation interne des gaz de combustion à l'intérieur de la flamme et ramene vers le centre une grande partie des gaz brûlés. Ce qui permet aussi un mélange du gaz avec les TEG plus rapide qu'un écoulement co-courant. Cette injection angulaire et les recirculations induites assurent, à la fois, la stabilité de la flamme, une flamme courte et la recombustion du CO par augmentation du temps de séjour. Il est possible de réaliser un brûleur comprenant plusieurs modules de brûleurs ou blocs avec ces caractéristiques.

Selon l'invention, l'angle α est compris entre 10° et 30°.

Selon un mode de réalisation particulier, les orifices d'injection ont une section de taille différente de chaque coté du plan P. Ainsi les orifices d'injection du gaz d'un même module, sont disposés symétriquement par rapport au plan P d'écoulement et peuvent avoir des sections et par conséquent des débits gaz différents entre le haut et le bas (si le plan P est horizontal).

Selon une caractéristique particulière, les deux orifices d'injection de combustible ont un axe qui se croise sur l'axe du conduit.

Selon une autre caractéristique, au moins deux autres orifices secondaires d'injection de combustible font un angle ξ avec le plan d'écoulement du combustible et que l'angle ξ est supérieur à l'angle α. Ceci permet une arrivée de TEG étagée qui favorise les recirculations et assure un ratio combustible/comburant optimal.

Avantageusement, les orifices secondaires d'injection de combustible d'angle ξ ont une section représentant 5% à 20% de la section totale des orifices d'injections de combustible. Par cette injection étagée du gaz avec un ratio d'étagement de 5 à 20%, on obtient de très faibles émissions de NOx (fonctionnement bas-NOx). Cette injection complémentaire s'effectue entre les plans d'injection des orifices de combustible et les ailettes.

Le module de brûleur en veine comprend des ailettes formant un angle β avec le plan d'écoulement du combustible. Selon l'invention, l'angle β est compris entre 2α et 3α. On obtient ainsi une grande taille de module (bloc) qui protège le développement évasé de la flamme et les recirculations internes liées à l'injection angulaire. Ceci permet de maintenir une zone chaude qui limite la formation de CO. On a ainsi la création d'une dépression locale de stabilisation importante même lors de fonctionnement avec des faibles vitesses de TEG. L'angle des casquettes égal à 2 à 3 fois l'angle d'injection du gaz permet à la fois de générer les espaces nécessaires à la bonne l'introduction des TEG et leur mélange aux des jets gaz dans la zone de combustion et au développement du remous principal.

Avantageusement, les ailettes ont une section présentant des ouvertures d'injection de comburant. Une arrivée de TEG étagée favorise les recirculations et assure un ratio combustible/comburant optimal, elle est réalisée grâce aux ouvertures qui sont de préférence en forme de fentes et dont le nombre et la section sont déterminés de manière à obtenir, un faible % du débit d'air stœchiométrique (de l'ordre de 5 à 25 %).

Selon une caractéristique particulière, les ouvertures présentent une section comprise entre 3 à 15% de la section des ailettes. La section de passage de ces ouvertures peut varier en fonction des caractéristiques de vitesse et d'oxygène des TEG.

Selon une autre caractéristique particulière, les ouvertures ont une section de taille différente de chaque coté du plan P. Ainsi, les sections de ces ouvertures et par conséquent des débits de TEG les traversant peuvent être différents entre le haut et le bas.

Selon une autre caractéristique, les ouvertures comportent des éléments de déviations faisant un angle θ avec le plan d'écoulement du combustible.

Avantageusement, l'angle θ est sensiblement égal à l'angle α. Les éléments de déviation confèrent aux ouvertures de passage un angle sensiblement identique de l'angle d'injection du gaz.

Avantageusement, la section des ouvertures augmente avec l'éloignement des orifices pour optimiser l'introduction progressive de l'air dans la flamme et diminuer la formation de CO.

Selon une disposition particulière, il comprend un bouclier placé entre le conduit et la flamme, ledit bouclier présentant des trous situés au droit des orifices d'injection. Un prémélange partiel inductif du jet gaz avec le comburant au niveau du bouclier d'accrochage. Cette disposition accélère le mélange TEG/gaz et améliore la stabilité de la flamme. La section de l'orifice de prémélange située dans le bouclier représente 15 à 40 fois la section de l'orifice de sortie du gaz. L'orifice de prémélange est situé à une distance de l'orifice gaz comprise entre 0.1 et 0.3 fois le diamètre du tube.

Avantageusement, les trous sont situés sur une paroi du bouclier qui présente un angle 8 par rapport à l'axe des orifices d'injection. Cette disposition favorise l'aspiration du comburant par le jet de gaz.

Avantageusement, l'angle 8 est sensiblement égal à 90°. Cette disposition favorise les turbulences locales et par conséquent la stabilité de la flamme malgré les faibles niveaux d'oxygène, de température et de vitesse des TEG.

Selon une caractéristique particulière, le module de brûleur comprend des baffles situées dans une partie extérieure du module de brûleur et que les dites baffles ont un rebord qui a un angle égal et opposé à celui de l'élément de déviation situé le plus éloigné du conduit. Cette forme spécialement étudiée des baffles ou extrémités des plaques d'obturation permet d'obtenir un écoulement des TEG autour des modules, parallèle ou quasi parallèle au plan d'écoulement du gaz afin de limiter la formation de CO par effet de trempe. Cette forme se caractérise par une symétrie entre l'extrémité des modules et l'extrémité des blocs.

Avantageusement, le module de brûleur présente une surface projetée sur un plan perpendiculaire à l'écoulement des TEG est comprise entre 0,1 et 0,3 m²/MW. La taille du module est définie par sa surface projetée sur un plan perpendiculaire à l'écoulement des TEG et cette taille est particulièrement avantageuse pour un taux d'oxygène amont compris entre 9% et 14% sur fumées humides.

Le procédé de combustion selon l'invention comprenant un module de brûleur en veine avec au moins une des caractéristiques précédentes, tel que le comburant a une teneur en oxygène inférieure à 21%.

Avantageusement, un prémélange est fait dans l'espace entre le conduit et le bouclier.

L'invention concerne également un bruleur en veine constitué de modules présentant les caractéristiques précédentes.

Avantageusement, deux modules adjacents ont des orifices d'injection avec des sections de taille différentes de chaque coté du plan P de façon alternée. Ainsi, en alternant des modules aux sections des orifices gaz augmentées d'un coté du plan P (par exemple en bas) et des modules avec les sections des orifices gaz augmentées de l'autre coté du plan P (par exemple en haut), il se crée une turbulence complémentaire dans le plan perpendiculaire au plan P d'écoulement et parallèle à l'axe du tube. Cette turbulence complémentaire accélère le mélange du gaz avec les TEG et raccourci les longueurs de flamme. Ainsi le rapport des sections entre les orifices haut et bas peut varier entre 0.25 et 4 et avantageusement entre 0,5 et 2.

Avantageusement, deux modules adjacents ont des ouvertures de taille différentes de chaque coté du plan P de façon alternée. Ainsi, en alternant des modules aux sections d'ouvertures augmentées d'un coté du plan P (par exemple en bas) et des modules avec les sections augmentées d'ouvertures de l'autre coté du plan P (par exemple en haut), il se crée une turbulence complémentaire dans le plan perpendiculaire au plan P d'écoulement et parallèle à l'axe du tube. Cette turbulence complémentaire accélère le mélange du gaz avec les TEG et raccourci les longueurs de flamme. Ainsi le rapport des sections entre les ouvertures haut et bas peut varier entre 0.25 et 4 et avantageusement entre 0,5 et 2.

D'autres avantages pourront encore apparaître à l'homme du métier à la lecture des exemples ci-dessous, illustrés par les figures annexées, donnés à titre illustratif.

### Brève description des figures

- La figure 1 est une vue d'un module de brûleur selon l'invention montrant le flux du combustible,
- La figure 2 est une vue du module brûleur de la figure 1 montrant le flux du comburant,
- La figure 3 est un détail du conduit du module de brûleur,
- La figure 4 est une variante du conduit de la figure 3,
- La figure 5 est une vue d'un coté des ailettes,
- La figure 6 est une vue en coupe d'un bruleur en veine constitué d'un ensemble de module de brûleurs
- La figure 7 est une vue de derrière de la figure 6,
- La figure 8 illustre une variante d'un bruleur en veine, constitué de plusieurs modules, vue de face,
- La figure 8a est une coupe de la figure 8 selon le plan AA,
- La figure 8b est une coupe de la figure 8 selon le plan BB,
- La figure 9a illustre en coupe une variante bruleur de la figure 8 selon le plan AA,
- La figure 9b est une coupe de la même variante de la figure 9a en BB.

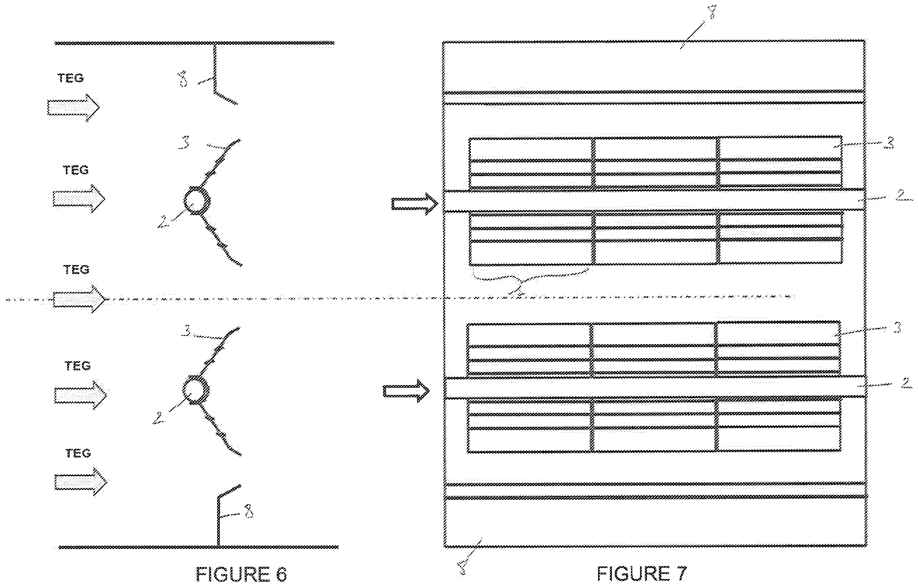

Les ensembles de brûleurs en veine, visibles sur la figure 7, sont constitués de plusieurs modules de brûleurs en veine 1 disposés les uns à coté des autres, chaque module de brûleur en veine comprend un conduit 2 constituant un conduit d'alimentation en combustible. Chaque module de brûleur 1 comprend des ailettes 3 disposées de part et d'autre du conduit 2, dans lequel s'écoule le combustible 4, de façon symétrique par rapport à un plan Pet d'un angle β. Le combustible s'écoule par des orifices d'injection 20 disposés de part et d'autre du plan P de façon symétrique.

Le conduit 2 est recouvert d'un bouclier 5 percé de trous 50 placés en vis-à-vis des orifices 20.

Les ailettes 3 d'un des cotés sont disposées plus ou moins éloignées du conduit 2. L'ailette 30 est la plus proche, l'ailette 31 est située de façon intermédiaire tandis que l'ailette 32 est disposée le plus à l'extérieur soit le plus éloignée du conduit 2. Les ailettes 30, 31, 32 sont séparées les unes des autres par des ouvertures 33. Il est bien entendu possible d'avoir plus ou moins de trois ailettes.

Nous allons maintenant expliquer le fonctionnement du module de brûleur.

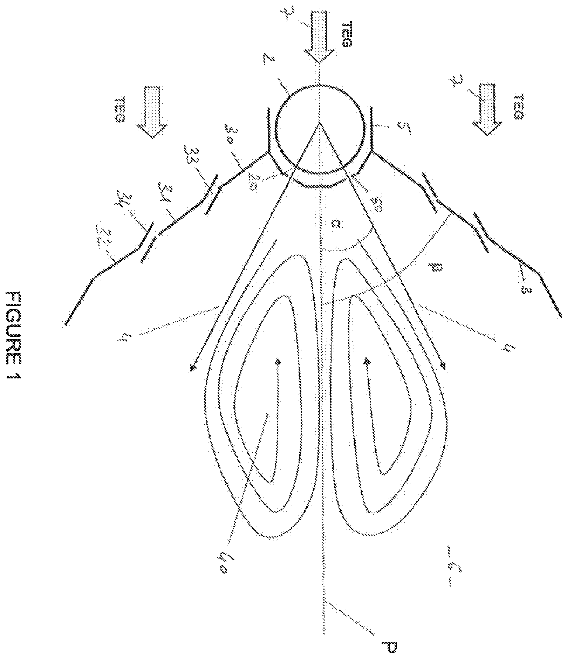

Le combustible 4 arrive par le conduit 2, il est injecté dans la chambre de combustion 6 par des orifices 20. Ces orifices 20 sont orientés avec un angle α par rapport au plan P d'écoulement du combustible. Cet angle permet de délimiter un espace sans apport de combustible et sans apport de comburant ce qui est favorable à la recirculation interne des gaz de combustion 4 à l'intérieur de la flamme comme illustré figure 1 en, créant un remous ou une turbulence principale 40 et qui ramène vers le centre une grande partie des gaz brûlés. L'angle β des ailettes est sensiblement compris entre 2α et 3α.

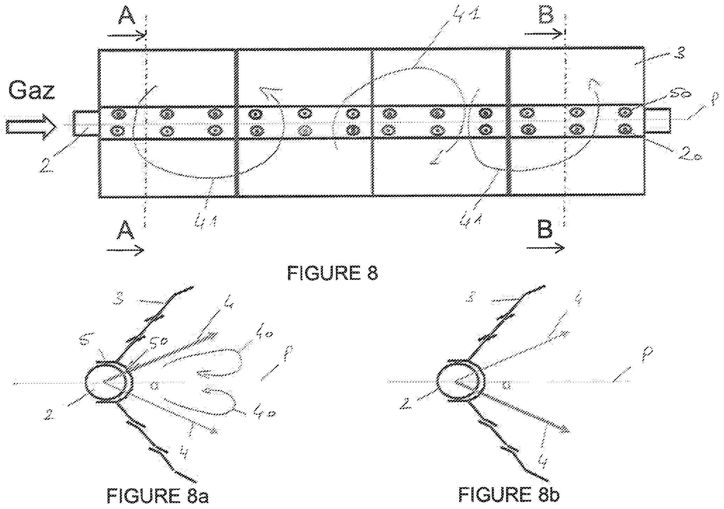

Dans le mode de réalisation illustré figures 8, 8a et 8b, les orifices d'injection 20 d'un même module 1, ont des sections de taille et par conséquent des débits de combustible 4 différents de chaque coté du plan P, soit, si P est horzontal, entre le haut et le bas. Ainsi, en alternant des modules 1 aux sections de taille d'orifice 20 augmentées en bas du plan P et des modules 1 avec les sections de taille d'orifice 20 augmentées en haut du plan P, il se crée une composante radiale 41 à la turbulence principale 40. Cette composante radiale 41 raccourcit les longueurs de flamme. Ainsi le rapport des tailles des sections entre les orifices 20 haut et bas peut varier entre 0.25 et 4 et avantageusement entre 0,5 et 2.

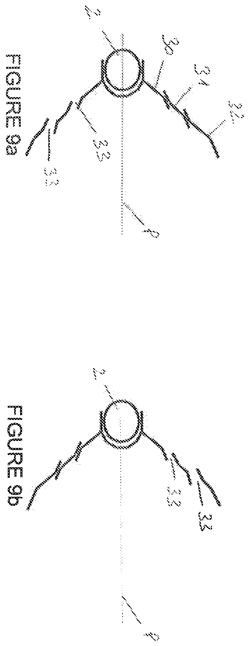

Dans un mode de réalisation illustré aux figures 9a et 9b, les ouvertures 33 des TEG d'un même module 1, ont des sections de taille différente entre le haut et le bas du plan P. Ainsi, en alternant des modules 1 des ouvertures 33 de taille augmentée en bas et des modules avec des ouvertures 33 de taille augmentée en haut, on crée ou on accroit la composante radiale complémentaire 41 à la turbulence 40 qui raccourcit les longueurs de flamme

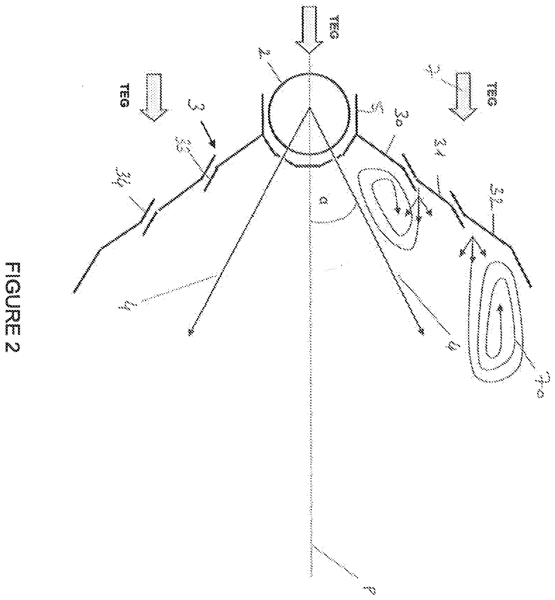

La figure 2 montre la circulation des TEG 7 ou gaz de turbine qui entrent par les ouvertures 33 avec un angle θ grâce aux éléments de déviation 34. Ceci permet de créer une zone de stabilisation 70.

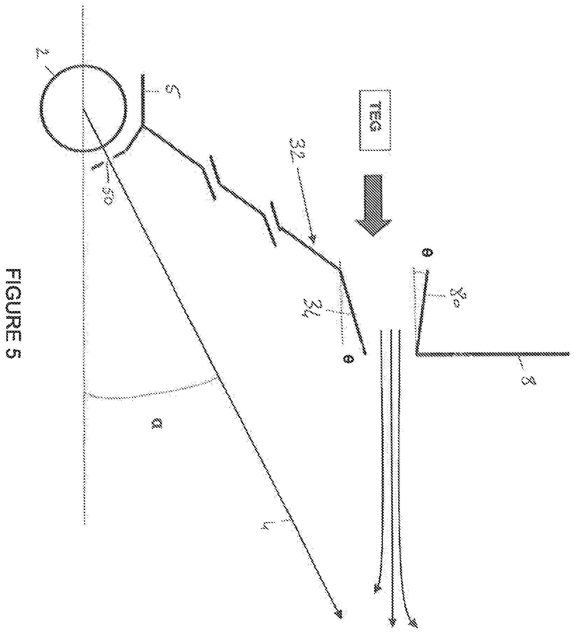

Comme illustré figure 5, les baffles 8 ont une extrémité présentant un rebord 80 qui coopèrent avec l'élément de déviation 34 de l'ailette 32 pour permettre un écoulement des TEG 7 autour des module de brûleurs 1 parallèlement ou quasi parallèlement au plan P. L'espace entre l'élément de déviation 34 de l'ailette 32 et le rebord 80 est plus important que la taille des ouvertures 33. Le rebord 80 fait un angle θ.

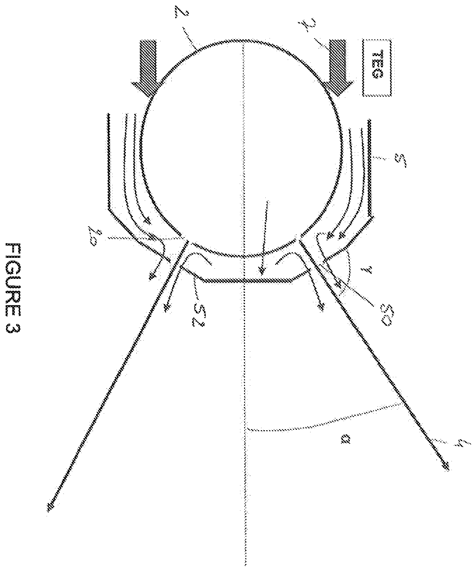

Entre le conduit 2 et le bouclier 5 circule des TEG (cf. figure 3) qui sont aspirés par l'orifice 20, dont le diamètre est de préférence plus grand que celui des trous 50, vers la chambre de combustion 6 et permet ainsi un prémélange du combustible 4. Le bouclier 5 présente des parois 52 planes qui sont plus favorables à la création de remous. Les trous 50 permettent l'injection du gaz avec un angle 8 par rapport à la paroi 52 du bouclier 5.

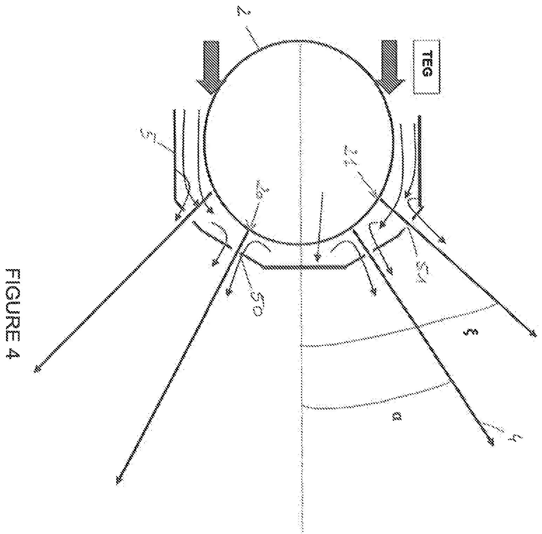

Selon une variante illustrée figure 4, le conduit 2 présente des ouvertures secondaires 21 d'injection qui permet l'injection du combustible 4 avec un angle 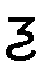 supérieur à α. Chaque ouverture secondaire 21 est placées en vis-à-vis d'un trou secondaires 51 du bouclier 5. La quantité de combustible 4 injectée est de 80 à 95% par les orifices 20 et les trous 50 et de 5 à 20% par les orifices secondaires 21 et les trous secondaires 51.

## Revendications

1. Module de brûleur en veine (1) d'air comprenant un conduit d'alimentation (2) présentant une section sensiblement circulaire et un axe, des orifices d'injection (20) de combustible situés sur le conduit et destinés à produire une flamme, des orifices d'injection (34) de comburant et des ailettes (3) disposées symétriquement par rapport à un plan P d'écoulement du combustible et latéralement sur le conduit (2) de chaque coté des orifices d'injection (20) de combustible, au moins deux orifices d'injection (20) de combustible dans une section du conduit (2) qui ont un axe qui fait un angle α avec le plan d'écoulement P du combustible, et des ailettes (3) formant un angle β avec le plan P d'écoulement du combustible, **caractérisé en ce que** l'angle ∝ est compris entre 10° et 30° et que l'angle β est compris entre 2α et 3α.

2. Module de bruleur en veine (1) selon la revendication 1, **caractérisé en ce que** les orifices d'injection (20) ont une section de taille différente de chaque coté du plan P.

3. Module de brûleur en veine selon une des revendications précédentes, **caractérisé en ce qu'**au moins deux orifices secondaires (21) d'injection de combustible font un angle ξ avec le plan P d'écoulement du combustible et que l'angle ξ est supérieur à l'angle α.

4. Module de brûleur en veine selon la revendication précédente, **caractérisé en ce que** les orifices secondaires (21) d'injection de combustible d'angle ξ ont une section représentant 5% à 20% de la section totale des orifices d'injections (20) de combustible.

5. Module de brûleur en veine (1) selon la revendication 1, **caractérisé en ce que** les ailettes (3) ont une section présentant des ouvertures d'injection (33) de comburant.

6. Module de brûleur en veine (1) selon la revendication précédente, **caractérisé en ce que** les ouvertures (33) présentent une section comprise entre 3 à 15% de la section des ailettes (3).

7. Module de bruleur en veine (1) selon une des revendications 5 ou 6, **caractérisé en ce que** les ouvertures (33) ont une section de taille différente de chaque coté du plan P.

8. Module de brûleur en veine (1) selon une des revendications 5, 6 ou 7, **caractérisé en ce que** les ouvertures (33) comportent des éléments de déviations (34) faisant un angle θ avec le plan P d'écoulement du combustible.

9. Module de brûleur en veine (1) selon la revendication précédente, **caractérisé en ce que** l'angle θ est sensiblement égal à l'angle α.

10. Module de brûleur en veine (1) selon une des revendications 5 à 9, **caractérisé en ce que** la section des ouvertures (33) augmente avec l'éloignement des orifices (20, 21).

11. Module de brûleur en veine (1) selon une des revendications précédentes, **caractérisé en ce qu'**il comprend un bouclier (5) placé entre le conduit (2) et la flamme, ledit bouclier (5) présentant des trous (50, 51) situés au droit des orifices d'injection (20, 21).

12. Module de brûleur en veine (1) selon la revendication précédente, **caractérisé en ce que** les trous (50, 51) sont situés sur une paroi (52) du bouclier qui présente un angle 8 par rapport à l'axe des orifices d'injection (20, 21).

13. Module de brûleur en veine (1) selon la revendication précédente, **caractérisé en ce que** l'angle 8 est sensiblement égal à 90°.

14. Module de brûleur en veine (1) selon une des revendications précédentes **caractérisé en ce qu'**il présente une surface projetée sur un plan perpendiculaire à l'écoulement des TEG est comprise entre 0,1 et 0,3 m²/MW.

15. Procédé de combustion comprenant un module de brûleur en veine selon une des revendications précédentes, **caractérisé en ce que** le comburant a une teneur en oxygène inférieure à 21%.

16. Procédé de combustion comprenant un module de brûleur selon une des revendications 11 à 13, **caractérisé en ce qu'**un prémélange est fait dans un espace entre le conduit (2) et le bouclier (5).

17. Bruleur constitué de modules selon une des revendications 1 à 14.

18. Bruleur selon la revendication précédente, **caractérisé en ce que** deux modules adjacents ont des orifices d'injection (20) avec des sections de taille différentes de chaque coté du plan P de façon alternée.

19. Bruleur selon une des revendications 17 ou 18, **caractérisé en ce que** deux modules adjacents ont des ouvertures (33) de taille différentes de chaque coté du plan P de façon alternée.

20. Brûleur selon une des revendications 17 à 19, **caractérisé en ce qu'**il comprend des baffles (8) situées dans une partie extérieure du module de brûleur (1) et que lesdites baffles (8) ont un rebord (80) qui a un angle égal et opposé à celui d'un élément de déviation (34) situé le plus éloigné du conduit.

## Patentansprüche

1. Brennermodul im Luftstrom (1), umfassend eine Versorgungsleitung (2), die einen etwa kreisförmigen Querschnitt aufweist und eine Achse, Brennstoff-Einleitungsöffnungen (20), die sich auf der Leitung befinden und bestimmt sind, eine Flamme zu erzeugen, Oxidationsmittel-Einleitungsöffnungen (34) und Flügel (3), die in Bezug auf eine Strömungsebene P des Brennstoffs symmetrisch und seitlich auf der Leitung (2) auf jeder Seite der Brennstoff-Einleitungsöffnungen (20) angeordnet sind, mindestens zwei Brennstoff-Einleitungsöffnungen (20) in einem Querschnitt der Leitung (2), die eine Achse haben, die mit der Strömungsebene P des Brennstoffs einen Winkel α bildet, und Flügel (3), die mit der Strömungsebene P des Brennstoffs einen Winkel β bilden, **dadurch gekennzeichnet, dass** der Winkel α zwischen 10° und 30° liegt und dass der Winkel β zwischen 2α und 3α liegt.

2. Brennermodul im Strom (1) nach Anspruch 1, **dadurch gekennzeichnet, dass** die Einleitungsöffnungen (20) einen Querschnitt haben, dessen Größe auf jeder Seite der Ebene P unterschiedlich ist.

3. Brennermodul im Strom nach einem der vorangehenden Ansprüche, **dadurch gekennzeichnet, dass** mindestens zwei sekundäre Brennstoff-Einleitungsöffnungen (21) mit der Strömungsebene P des Brennstoffs einen Winkel ξ bilden und dass der Winkel ξ größer als der Winkel α ist.

4. Brennermodul im Strom nach vorangehendem Anspruch, **dadurch gekennzeichnet, dass** die sekundären Brennstoff-Einleitungsöffnungen (21) mit einem Winkel ξ einen Querschnitt haben, der 5 % bis 20 % des Querschnitts insgesamt der Brennstoff-Einleitungsöffnungen (20) darstellt.

5. Brennermodul im Strom (1) nach Anspruch 1, **dadurch gekennzeichnet, dass** die Flügel (3) einen Querschnitt haben, der Oxidationsmittel-Einleitungsöffnungen (33) aufweist.

6. Brennermodul im Strom (1) nach vorangehendem Anspruch, **dadurch gekennzeichnet, dass** die Öffnungen (33) einen Querschnitt aufweisen, der zwischen 3 bis 15 % des Querschnitts der Flügel (3) liegt.

7. Brennermodul im Strom (1) nach einem der Ansprüche 5 oder 6, **dadurch gekennzeichnet, dass** die Öffnungen (33) einen Querschnitt haben, dessen Größe auf jeder Seite der Ebene P unterschiedlich ist.

8. Brennermodul im Strom (1) nach einem der Ansprüche 5, 6 oder 7, **dadurch gekennzeichnet, dass** die Öffnungen (33) Ablenkungselemente (34) aufweisen, die mit der Strömungsebene P des Brennstoffs einen Winkel Θ bilden.

9. Brennermodul im Strom (1) nach vorangehendem Anspruch, **dadurch gekennzeichnet, dass** der Winkel Θ etwa gleich dem Winkel α ist.

10. Brennermodul im Strom (1) nach einem der Ansprüche 5 bis 9, **dadurch gekennzeichnet, dass** der Querschnitt der Öffnungen (33) mit der Entfernung der Öffnungen (20, 21) zunimmt.

11. Brennermodul im Strom (1) nach einem der vorangehenden Ansprüche, **dadurch gekennzeichnet, dass** es einen Schild (5) umfasst, der zwischen der Leitung (2) und der Flamme platziert ist, wobei der Schild (5) Löcher (50, 51) aufweist, die sich senkrecht zu den Einleitungsöffnungen (20, 21) befinden.

12. Brennermodul im Strom (1) nach vorangehendem Anspruch, **dadurch gekennzeichnet, dass** sich die Löcher (50, 51) auf einer Wand (52) des Schilds befinden, die einen Winkel 8 in Bezug auf die Achse der Einleitungsöffnungen (20, 21) bildet.

13. Brennermodul im Strom (1) nach vorangehendem Anspruch, **dadurch gekennzeichnet, dass** der Winkel 8 etwa gleich 90° ist.

14. Brennermodul im Strom (1) nach einem der vorangehenden Ansprüche, **dadurch gekennzeichnet, dass** es eine Oberfläche aufweist, die, projiziert auf eine zum Strömen der TEG senkrechte Ebene, zwischen 0,1 und 0,3 m2/MW liegt.

15. Verbrennungsverfahren, umfassend ein Brennermodul im Strom nach einem der vorangehenden Ansprüche, **dadurch gekennzeichnet, dass** das Oxidationsmittel einen Sauerstoffgehalt von unter 21 % hat.

16. Verbrennungsverfahren, umfassend ein Brennermodul nach einem der Ansprüche 11 bis 13, **dadurch gekennzeichnet, dass** in einem Raum zwischen der Leitung (2) und dem Schild (5) eine Vormischung erfolgt.

17. Brenner, gebildet aus Modulen nach einem der Ansprüche 1 bis 14.

18. Brenner nach vorangehendem Anspruch, **dadurch gekennzeichnet, dass** zwei benachbarte Module abwechselnd Einleitungsöffnungen (20) mit Querschnitten unterschiedlicher Größe auf jeder Seite der Ebene P haben.

19. Brenner nach einem der Ansprüche 17 oder 18, **dadurch gekennzeichnet, dass** zwei benachbarte Module abwechselnd Öffnungen (33) unterschiedlicher Größe auf jeder Seite der Ebene P haben.

20. Brenner nach einem der Ansprüche 17 bis 19, **dadurch gekennzeichnet, dass** er Gitter (8) umfasst, die sich in einem äußeren Teil des Brennermoduls (1) befinden und dass die Gitter (8) eine Kante (80) haben, die einen Winkel gleich und entgegengesetzt zu dem eines Ablenkungselements (34) ist, welches sich am weitesten von der Leitung entfernt befindet.

## Claims

1. A burner module (1) in an air stream comprising a feed pipe (2) of substantially circular cross section and having an axis, fuel injection orifices (20) situated on the pipe and intended to produce a flame, oxidant injection orifices (34) and fins (3) arranged symmetrically with espect to a plane P of flow of the fuel upstream of the burner module and laterally on the pipe (2) on each side of the fuel injection orifices (20), at least two fuel injection orifices (20) in a section of the pipe (2) that have an axis that makes an angle α with the plane of flow P of the fuel, and fins (3) making an angle β with the plane P of flow of the fuel, **characterized in that** the angle α is between 10° and 30° inclusive and **in that** the angle β is between 2α and 3α.

2. The in-stream burner module (1) as claimed in claim 1, **characterized in** the injection orifices (20) have a section of different size on each side of the plane P.

3. The in-stream burner module as claimed in either one of the preceding claims, wherein at least two secondary fuel injection orifices (21) make an angle ξ with the plane P of flow of the fuel and the angle ξ is greater than the angle α.

4. The in-stream burner module as claimed in the preceding claim, wherein the secondary fuel injection orifices (21) of angle ξ have a section representing 5% to 20% of the total section of the fuel injection orifices (20) .

5. The in-stream burner module (1) as claimed in claim 1, wherein the fins (3) have a section including oxidant injection openings (33).

6. The in-stream burner module (1) as claimed in the preceding claim, wherein the openings (33) have a section between 3% and 15% inclusive of the section of the fins (3).

7. The in-stream burner module (1) as claimed in either one of claims 5 to 6, wherein the openings (33) have a section of different size on each side of the plane P.

8. The in-stream burner module (1) as claimed in any one of claims 5, 6 or 7, wherein the openings (33) include deflection elements (34) making an angle θ with the plane P of flow of the fuel.

9. The in-stream burner module (1) as claimed in the preceding claim, wherein the angle θ is substantially equal to the angle α.

10. The in-stream burner module (1) as claimed in any one of claims 5 to 9, wherein the section of the openings (33) increases with the distance between the orifices (20, 21).

11. The in-stream burner module (1) as claimed in any one of the preceding claims, wherein it comprises a shield (5) placed between the pipe (2) and the flame, said shield (5) having holes (50, 51) situated in line with the injection orifices (20, 21).

12. The in-stream burner module (1) as claimed in the preceding claim, wherein the holes (50, 51) are situated on a wall (52) of the shield that makes an angle **8** relative to the axis of the injection orifices (20, 21).

13. The in-stream burner module (1) as claimed in the preceding claim, **characterized in** the angle **8** is substantially equal to 90°.

14. The in-stream burner module (1) as claimed in any one of the preceding claims, wherein it has an area projected onto a plane perpendicular to the flow of the TEG between 0.1 m2/MW and 0.3 m2/MW inclusive.

15. A combustion process comprising an in-stream burner module as claimed in any one the preceding claims, wherein the oxidant has an oxygen concentration less than 21%.

16. A combustion method comprising a burner module as claimed in any one of claims 11 to 13, wherein premixing is effected in a space between the pipe (2) and the shield (5).

17. A burner consisting of modules as claimed in any one of claims 1 to 14.

18. The burner as claimed in the preceding claim, wherein two adjacent modules have injection orifices (20) with sections of different size on each side of the plane P alternately.

19. The burner as claimed in one of claims 17 or 18, wherein two adjacent modules have openings (33) of different size on each side of the plane P alternately.

20. The according to one of claims 17 to 19, wherein it comprises baffles (8) situated in an exterior part of the burner module (1) and said baffles (8) have a rim (80) that has an angle equal to and opposite that of the deflection element (34) situated farthest from the pipe.
